# EUROPÄISCHE PATENTSCHRIFT

(11) **EP 1 658 198 B1**
(45) Veröffentlichungstag und Bekanntmachung des Hinweises auf die Patenterteilung: **06.05.2009**
(21) Anmeldenummer: 04734849.5
(22) Anmeldetag: 26.05.2004
(51) Int. Cl.: B60Q 1/00, G05D 1/02

(54) **VERFAHREN UND VORRICHTUNG ZUR UNTERSTÜTZUNG EINES EINPARKVORGANGES UNTER BERÜCKSICHTIGUNG DER GEGENFAHRBAHN**
METHOD AND DEVICE FOR ASSISTING A PARKING PROCESS IN TERMS OF THE CARRIAGEWAY
PROCEDE ET DISPOSITIF POUR DETERMINER LA POSITION ET/OU LA POSITION ANTICIPEE D'UN VEHICULE PENDANT UNE OPERATION DE STATIONNEMENT EN RELATION AVEC LA VOIE DE CIRCULATION OPPOSEE D'UNE ROUTE A VOIES MULTIPLES

(30) Priorität: 21.07.2003 DE 10332961
(43) Veröffentlichungstag der Anmeldung: 24.05.2006
(73) Patentinhaber: ROBERT BOSCH GMBH, 70442 Stuttgart (DE)
(72) Erfinder: DANZ, Christian, 70469 Stuttgart (DE); BOLLENGIER, Cyrille, 70469 Stuttgart (DE)
(86) Internationale Anmeldenummer: PCT/EP2004/050928
(87) Internationale Veröffentlichungsnummer: WO 2005/009787

(56) Entgegenhaltungen:
- EP-A- 1 065 642

## Beschreibung

### Technisches Gebiet

Die Erfindung betrifft eine Vorrichtung und ein Verfahren mit den in den Oberbegriffen der Ansprüche 1 und 7 genannten Merkmalen.

### Stand der Technik

Die zunehmende Verkehrsdichte und verstärkte Bebauung freier Flächen engen den Verkehrsraum, insbesondere in Ballungszentren, kontinuierlich ein. Der zur Verfügung stehende Parkraum wird enger und die Suche nach einer geeigneten Parklücke belastet den Fahrer zusätzlich zum stetig steigenden Verkehrsaufkommen. Insbesondere beim rückwärtigen Einparken in eine Parklücke muss der Führer eines Fahrzeuges besonders konzentriert sein. Dabei muss er insbesondere den Raum hinter dem Fahrzeug einsehen, um das Fahrzeug richtig in die Parklücke hineinzufahren. Aus diesem Grund ist vor allem die Aufmerksamkeit des Führers eines Fahrzeuges in Vorwärtsrichtung des Fahrzeuges verringert. Während eines rückwärts gerichteten Einpark-Vorganges besteht die Möglichkeit, während des Lenkens nach rechts (Lenkrichtung des Lenkrades) beim Rückwärtsfahren mit der fahrerseitigen Front des Fahrzeuges in die Gegenfahrspur der Fahrbahn einzutauchen. Hieraus resultiert eine potentiell gefährliche Situation, welche besonders bei kleinen Parklücken nicht immer umgangen werden kann.

Zur Entlastung des Führers eines Fahrzeuges beim Einparken sind unterschiedlichste Vorrichtungen, wie zum Beispiel eine Parklückenvermessung oder ein semiautonomer oder ein vollautonomer Parkassistent bekannt. Diese Vorrichtungen vereinfachen insbesondere das Auswählen einer Parklücke und das zielgerichtete, erfolgreiche Hineinlenken des Fahrzeuges. Nachteilig an den vorgenannten Vorrichtungen nach dem Stand der Technik ist es jedoch, dass keine der vorgenannten Vorrichtungen ein potentiell bevorstehendes Eintauchen des Fahrzeuges in die Gegenfahrspur signalisiert beziehungsweise verhindert oder den Fahrer auf eine solche Gefahrensituation aufmerksam macht.

### Darstellung der Erfindung, Aufgabe, Lösung, Vorteile

Es ist daher Aufgabe der vorliegenden Erfindung, ein Verfahren und eine Vorrichtung anzugeben, welche ein Eintauchen eines Fahrzeuges während eines rückwärtigen Einpark-Vorganges in die Gegenfahrspur einer mehrspurigen Fahrbahn rechtzeitig erkennt und im Bedarfsfalle geeignete Mittel zur Verhinderung des Eintauchens in die Gegenfahrspur aktiviert. Diese Aufgabe wird erfindungsgemäß gelöst durch die Merkmale im kennzeichnenden Teil des Anspruchs 1 (Verfahrensanspruch) und des Anspruchs 7 (Vorrichtungsanspruch) im Zusammenwirken mit den Merkmalen im Oberbegriff. Zweckmäßige Ausgestaltungen sind in den Unteransprüchen enthalten.

Das erfindungsgemäße Verfahren ist durch folgende Verfahrensschritte gekennzeichnet:
- Bestimmung der Lage der Gegenfahrspur in Relation zum Fahrzeug zu Beginn des Einpark-Vorganges,
- Bestimmung der zu erwartenden Einparktrajektorie des Fahrzeuges,
- Ermittlung von potentiellen Schnittpunkten der zu erwartenden Einparktrajektorie mit der Gegenfahrspur und
- Bereitstellen eines Signals bei Vorhandensein mindestens eines Schnittpunktes der Einparktrajektorie mit der Gegenfahrspur, welches mit Mitteln verarbeitet wird.

Durch das vorgenannte Verfahren kann sowohl die Position des einzuparkenden Fahrzeuges bezüglich der Fahrspuren vor dem Einpark-Vorgang als auch die wahrscheinliche Einparktrajektorie, das heißt der vom Fahrzeug zu durchfahrende Weg, ermittelt werden. Hierdurch ist es bereits im Vorhinein möglich, eine Aussage darüber zu treffen, ob das Fahrzeug während des gesamten Einpark-Vorganges in die Gegenfahrspur eintauchen wird. Im Falle des Eintauchens des Fahrzeuges in die Gegenfahrspur wird erfindungsgemäß ein Signal bereitgestellt, welches mit entsprechenden Mitteln, vorzugsweise Mitteln zur Warnung des Führers des Kraftfahrzeuges beziehungsweise Mitteln zur Bremsung des Fahrzeuges, verarbeitet wird. Hierdurch kann es erfindungsgemäß erreicht werden, dass der Führer eines Kraftfahrzeuges, welcher während eines rückwärts gerichteten Einpark-Vorganges eine geringe Aufmerksamkeit in den vor dem Fahrzeug liegenden Bereich, insbesondere die Gegenfahrspur mit den im Gegenverkehr entgegenkommenden Objekten (Fahrzeugen), besitzt, im Falle eines bevorstehenden Eintauchens des Fahrzeuges in die Gegenfahrspur und damit einer möglichen Kollision mit in der Gegenfahrspur befindlichen Fahrzeugen gewarnt wird. Alternativ ist es vorgesehen, dass das Fahrzeug durch entsprechende Mittel abgebremst wird, bevor es in die Gegenfahrspur eintauchen kann. Hierdurch kann insbesondere die aktive Verkehrssicherheit des Fahrzeuges erhöht werden, da vor allem bei rückwärts gerichteten Einpark-Vorgängen einer Kollision mit dem in der Gegenspur befindlichen Gegenverkehr vorgebeugt werden kann.

Erfindungsgemäß ist vorgesehen, dass bei der Durchführung des Verfahrens die Größe einer Parkücke mittels Ultraschallsensoren ermittelt wird. Diese bzw. alle ermittelten Daten werden dann vorteilhafterweise mittels eines Datenverarbeitungsgerätes vearbeitet, wobei erfindungsgemäß das Datenverarbeitungsgerät ein Bordcomputer eines Fahrzeuges ist.

Als vorteilhafte Ausgestaltungen ist vorgesehen, dass das Mittel eine Vorrichtung zur Warnung des Führers des Fahrzeuges ist, wobei das Mittel zur Warnung des Führers des Fahrzeuges insbesondere ein akustisches, optisches und/oder haptisches Mittel ist, oder das Mittel eine Vorrichtung zum Bremsen des Fahrzeuges ist.

Die Position des Fahrzeuges zu Beginn des Einpark-Vorganges und die Lage der Gegenfahrspur in Relation zum Fahrzeug zu Beginn des Einpark-Vorganges wird vorzugsweise mittels Ultraschallsensoren, Radar-, Lidar-, Video- oder anderen Abstandssensoren ermittelt. Weiterhin wird die zu erwartende Park-End-Position, welche sich vor allem aus der Größe der Parklücke ergibt, mittels Ultraschallsensoren ermittelt. Aus den ermittelten Daten kann nun mit Hilfe mathematischer Berechnungen die Einparktrajektorie, beispielsweise mittels eines Datenverarbeitungsgerätes, vorzugsweise dem Bordcomputer eines Kraftfahrzeuges, berechnet werden.

Eine erfindungsgemäße Vorrichtung zur Bestimmung der Position und/oder der zu erwartenden Position eines Fahrzeuges während eines Einpark-Vorganges in Relation zur Gegenfahrspur einer mehrspurigen Fahrbahn weist:
- Mittel zur Bestimmung der Lage der Gegenfahrspur in Relation zum Fahrzeug zu Beginn des Einpark-Vorganges,
- Mittel zur Bestimmung der zu erwartenden Einparktrajektorie des Fahrzeuges,
- Mittel zur Ermittlung von potentiellen Schnittpunkten der zu erwartenden Einparktrajektorie mit der Gegenfahrspur,
- Mittel zum Bereitstellen eines Signals bei Vorhandensein mindestens eines Schnittpunktes der Einparktrajektorie mit der Gegenfahrspur, welches mit Mitteln verarbeitet wird,

auf. Dabei weist das Mittel zur Bestimmung der Lage der Gegenfahrspur in Relation zum Fahrzeug vorzugsweise mindestens einen Ultraschallsensor auf.

In einer weiteren Ausgestaltung der Erfindung ist es vorgesehen, eventuell vorhandene Kameras eines Videosystems im Fahrzeug zu verwenden, um auf der Gegenfahrspur entgegenkommende Fahrzeuge zu klassifizieren und nur im Falle einer wirklichen Gefährdung während des Einparkens, das heißt im Falle einer hohen Wahrscheinlichkeit für eine Kollision, eine Warnung zu generieren und an den Fahrer auszugeben.

In einer weiteren, bevorzugten Ausführungsvariante der Erfindung kann die Gefährlichkeit der Situation von einem semiautonomen Einparksystems klassifiziert werden und eine automatische, rechtzeitige Bremsung zur Vermeidung einer Kollision bei Vorliegen einer gefährlichen Situation ausgelöst werden.

Weitere bevorzugte Ausgestaltungen der Erfindung ergeben sich aus den in den Unteransprüchen genannten Merkmalen.

### Kurze Beschreibung der Zeichnungen

Nachstehend wird die Erfindung in einem Ausführungsbeispiel anhand der beigefügten Zeichnungen näher erläutert. Es zeigen:
- Fig. 1: das Eintauchen eines in Rückwärtsrichtung einparkenden Fahrzeuges in die Gegenfahrspur, und
- Fig. 2: ein Fahrzeug mit einer erfindungsgemäßen Vorrichtung zur Bestimmung der Position und/oder der zu erwartenden Position des Fahrzeuges während des Einpark-Vorganges.

### Bester Weg zur Ausführung der Erfindung

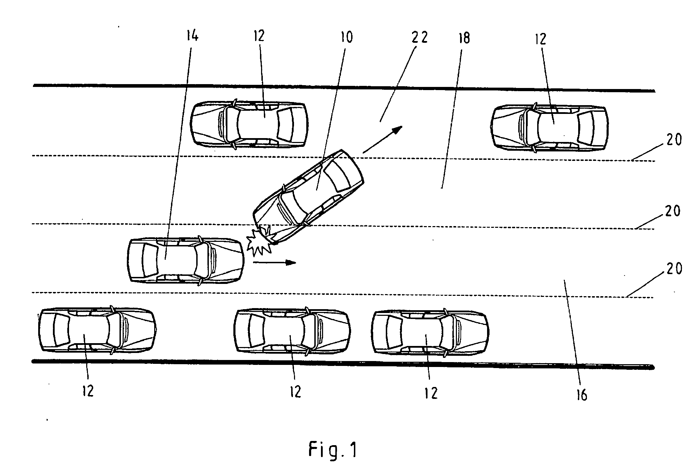

Fig. 1 zeigt das schematische Eintauchen eines Fahrzeuges 10 in die Gegenfahrspur 16. Insbesondere bei dichtem Verkehrsaufkommen, wie beispielsweise in Ballungszentren, ist der Parkraum 22 sehr knapp. Hieraus kann es sich ergeben, dass der Führer des Kraftfahrzeuges 10 darauf angewiesen ist, zwischen parkenden Fahrzeugen 12 in eine räumlich eng begrenzte Parklücke 22 rückwärts einzufahren. Hierbei ist es oft unumgänglich, dass das Fahrzeug 10 während des rückwärts gerichteten Einpark-Vorganges die Fahrspurbegrenzung 20 der eigenen Fahrspur 18 überschreitet und somit in die Gegenfahrspur 16 eintaucht. Dies stellt eine potentiell gefährliche Straßenverkehrssituation wegen der möglichen Kollision mit im Gegenverkehr befindlichen Fahrzeugen 14 dar.

Zur Vermeidung solcher Kollisionen während eines rückwärts gerichteten Einpark-Vorganges, bei welchem der Führer des Fahrzeuges 10 in der Regel eine geringe Aufmerksamkeit bezüglich des vorderen Bereiches und der Gegenfahrspur 16 besitzt, ist es erfindungsgemäß vorgesehen, dass ein Eintauchen in die Gegenfahrspur 16 so rechtzeitig erkannt wird, dass beispielsweise eine Warnung an den Führer des Fahrzeuges 10 abgegeben werden kann, welche dazu führt, dass der Einpark-Vorgang mit einem resultierenden Eintauchen in die Gegenfahrspur 16 rechtzeitig abgebrochen werden kann. Alternativ ist es möglich, ein automatisches Bremsen des Fahrzeuges 10 zu bewirken. Die erfindungsgemäße Vorrichtung lässt sich besonders vorteilhaft bei Fahrzeugen mit bereits vorhandener Parklückenvermessung (PLV) oder einem Semiautonomen Park Assistent (SPA) integrieren, weil hier bereits die erforderlichen Ultraschallsensoren am Fahrzeug 10 vorinstalliert sind, welche verwendet werden können. Dabei wird der Fahrer über eine potentiell gefährliche Situation über ein entsprechendes HMI (optisch, akustisch, haptisch) gewarnt, falls sein Fahrzeug 10 in die Gegenfahrspur 16 einzutauchen droht.

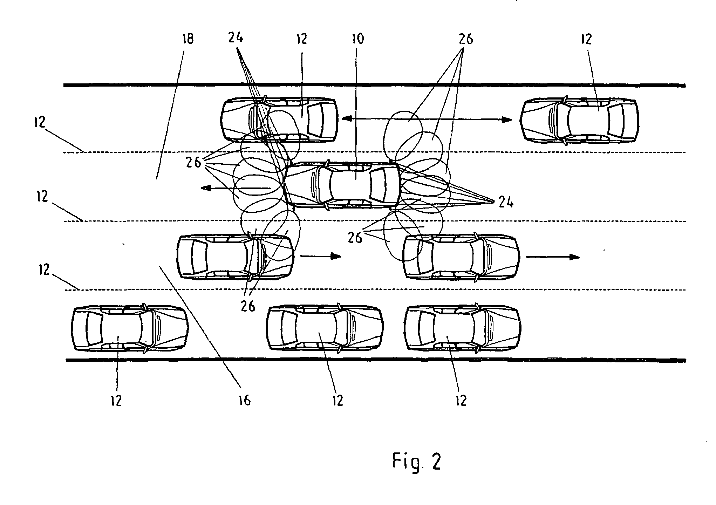

Die Ermittlung, ob ein Eintauchen in die Gegenfahrspur 16 bevorsteht, kann mittels Ultraschallsensoren 24 realisiert werden, wie in Fig. 2 schematisch dargestellt ist. Die Ultraschallsensoren 24 besitzen einen Abtastbereich 26. Anstelle der Ultraschallsensoren können auch Radar-, Lidar-, Video- oder andere Abstandssensoren verwendet werden. Innerhalb dieses Abtastbereiches 26 werden sowohl parkende Fahrzeuge 12 als auch in der Gegenspur 16 befindliche Fahrzeuge 14 registriert. Zusätzlich können Bilddaten eines videobasierten Lane Departure Warning (LDW) Systems verwendet werden. Das LDW-System liefert den Fahrbahnrand auf der rechten Seite und falls vorhanden auch die Mittellinie 20 der Fahrspur (bestehend aus 16, 18). Auf Basis der Ultraschalldaten und der eventuell vorhandenen LDW-Daten ist zumindest eine genaue Positionsbestimmung des Fahrzeuges 10 innerhalb der Fahrspur 18 möglich. Nach berechneter Einparktrajektorie kann somit auch ermittelt werden, ob das Fahrzeug 10 während des Einparkens in die Gegenfahrspur 16 eintaucht. Falls kein videobasiertes LDM-System im Fahrzeug integriert ist, kann die Warnung auf Basis nur allein der Ultraschalldaten der Ultraschallsensoren 24 generiert werden. Hierbei wird eine Umgebungskarte auf Basis der rings um das Fahrzeug angebrachten Ultraschallsensoren 24 angefertigt, in der die Positionen der parkenden Fahrzeuge 12 verfügbar sind. Zusätzlich wird schon während einer Parklückenvermessung mit den an beiden Fahrzeugseiten zur Seite angeordneten Ultraschallsensoren 24 der Abstand zu den parkenden Fahrzeugen 12 und falls vorhanden den Fahrzeugen 14 des Gegenverkehrs gemessen. Auf Basis der Informationen über den Abstand des einparkenden Fahrzeuges 10 von den parkenden Fahrzeugen 12, dem Abstand zu den im Gegenverkehr passierenden Fahrzeugen 14 und der Länge der vorliegenden Parklücke kann eine Aussage über die Wahrscheinlichkeit des Eintauchens in die Gegenfahrspur 16 generiert werden.

Die Erfindung ist nicht beschränkt auf die hier dargestellten Ausführungsbeispiele, vielmehr ist es möglich, durch Kombination und Modifikation der genannten Mittel und Merkmale weitere Ausführungsvarianten zu realisieren, ohne den Rahmen der Erfindung zu verlassen.

## Patentansprüche

1. Verfahren zur Bestimmung der Position und/oder der zu erwartenden Position eines Fahrzeuges während eines Einpark-Vorganges in Relation zur Gegenfahrspur einer mehrspurigen Fahrbahn **gekennzeichnet durch** folgende Verfahrensschritte:
- Bestimmung der Lage der Gegenfahrspur (16) in Relation zum Fahrzeug (10) zu Beginn des Einpark-Vorganges,
- Bestimmung der zu erwartenden Einparktrajektorie (28) des Fahrzeuges (10),
- Ermittlung von potentiellen Schnittpunkten der zu erwartenden Einparktrajektorie (28) mit der Gegenfahrspur (16) und
- Bereitstellen eines Signals bei Vorhandensein mindestens eines Schnittpunktes der Einparktrajektorie (28) mit der Gegenfahrspur (16), welches mit Mitteln verarbeitet wird.

2. Verfahren nach Anspruch 1,
**dadurch gekennzeichnet, dass**
die zu erwartende Einparktrajektorie (28) des Fahrzeuges (10) anhand der Position des Fahrzeuges (10) zu Beginn des Einpark-Vorganges und der zu erwartenden Park-Endposition des Fahrzeuges (10) ermittelt wird.

3. Verfahren nach einem der vorhergehenden Ansprüche,
**dadurch gekennzeichnet, dass**
die zu erwartende Einparktrajektorie (28) des Fahrzeuges (10) während des Einpark-Vorganges mit der tatsächlich gefahrenen Einparktrajektorie (30) des Fahrzeuges (10) verglichen wird und aus diesen Daten die verbleibende, zu erwartende Einparktrajektorie ermittelt wird.

4. Verfahren nach einem der vorhergehenden Ansprüche,
**dadurch gekennzeichnet, dass**
die Position des Fahrzeuges (10) zu Beginn des Einpark-Vorganges, die Lage der Gegenfahrspur (16) in Relation zum Fahrzeug (10) zu Beginn des Einpark-Vorganges und die zu erwartende Park-Endposition des Fahrzeuges (10) mittels Ultraschallsensoren (24), Radar-, Lidar-, Video- oder anderen Abstandssensoren, Lenkwinkelsensoren und/oder eines Lane Departure Warning Systems ermittelt werden.

5. Verfahren nach einem der vorhergehenden Ansprüche,
**dadurch gekennzeichnet, dass**
die sich dem Fahrzeug (10) in der Gegenfahrspur (16) nähernden Objekte (14) mittels eines videobasierten Kamerasystems nach ihrer tatsächlichen Gefährlichkeit bei einer potentiellen Kollision mit dem Fahrzeug (10) klassifiziert werden.

6. Verfahren nach Anspruch 5,
**dadurch gekennzeichnet, dass**
bei Vorhandensein mindestens eines Schnittpunktes der Einparktrajektorie (28) mit der Gegenfahrspur (16) lediglich im Fall sich in der Gegenfahrspur (16) nähernder Objekte (14) mit hoher Gefährlichkeit bei einer potentiellen Kollision ein Signal bereitgestellt wird.

7. Vorrichtung zur Bestimmung der Position und/oder der zu erwartenden Position eines Fahrzeuges während eines Einpark-Vorganges in Relation zur Gegenfahrspur einer mehrspurigen Fahrbahn
**gekennzeichnet durch**
- Mittel zur Bestimmung der Lage der Gegenfahrspur (16) in Relation zum Fahrzeug (10) zu Beginn des Einpark-Vorganges,
- Mittel zur Bestimmung der zu erwartenden Einparktrajektorie (28) des Fahrzeuges (10),
- Mittel zur Ermittlung von potentiellen Schnittpunkten der zu erwartenden Einparktrajektorie (28) mit der Gegenfahrspur (16) und
- Mittel zum Bereitstellen eines Signals bei Vorhandensein mindestens eines Schnittpunktes der Einparktrajektorie mit der Gegenfahrspur (16), welches mit Mitteln verarbeitet wird.

8. Vorrichtung nach Anspruch 7,
**dadurch gekennzeichnet, dass**
das Mittel zur Bestimmung der Lage der Gegenfahrspur (16) in Relation zum Fahrzeug (10) mindestens einen Ultraschallsensor (24), einen Radar-, Lidar-, Video- oder einen anderen Abstandssensor aufweist.

9. Vorrichtung nach Anspruch 7 oder 8,
**dadurch gekennzeichnet, dass**
das Mittel zur Bestimmung der Lage der Gegenfahrspur (16) in Relation zum Fahrzeug (10) mit dem Bordcomputer des Fahrzeuges (10) verbunden ist.

10. Vorrichtung nach mindestens einem der Ansprüche 7 bis 9,
**dadurch gekennzeichnet, dass**
das bereitgestellte Signal mit einem Mittel zur Warnung des Führers des Fahrzeuges (10) und/oder einem Mittel zur Unterbrechung des Einpark-Vorganges verarbeitet wird.

## Claims

1. Method for determining the position and/or the anticipated position of a vehicle in relation to the oncoming lane of a multi-lane carriageway during a parking process, **characterized by** the following method steps:
- determination of the position of the oncoming lane (16) in relation to the vehicle (10) at the start of the parking process,
- determination of the anticipated parking trajectory (28) of the vehicle (10),
- determination of potential points of intersection of the anticipated parking trajectory (28) with the oncoming lane (16), and
- provision of a signal when there is at least one point of intersection of the parking trajectory (28) with the oncoming lane (16), which signal is processed using means.

2. Method according to Claim 1,
**characterized in that**
the anticipated parking trajectory (28) of the vehicle (10) is determined on the basis of the position of the vehicle (10) at the start of the parking process and the anticipated final parked position of the vehicle (10).

3. Method according to one of the preceding claims,
**characterized in that**
the anticipated parking trajectory (28) of the vehicle (10) during the parking process is compared with the parking trajectory (30) which is actually adopted by the vehicle (10), and the remaining, anticipated parking trajectory is determined from these data.

4. Method according to one of the preceding claims,
**characterized in that**
the position of the vehicle (10) at the start of the parking process, the position of the oncoming lane (16) in relation to the vehicle (10) at the start of the parking process and the anticipated final parked position of the vehicle (10) are determined by means of ultrasonic sensors (24), radar, lidar, video or other distance sensors, steering angle sensors and/or a lane departure warning system.

5. Method according to one of the preceding claims,
**characterized in that**
the objects (14) which approach the vehicle (10) on the oncoming lane (16) are classified by means of a video-based camera system according to the actual danger which they present in the event of a potential collision with the vehicle (10).

6. Method according to Claim 5,
**characterized in that**
when there is at least one point of intersection of the parking trajectory (28) with the oncoming lane (16), a signal is made available only if objects (14) which are approaching on the oncoming lane (16) present a high degree of danger in the event of a potential collision.

7. Device for determining the position and/or the anticipated position of a vehicle during a parking process in relation to the oncoming lane of a multi-lane carriageway
**characterized by**
- means for determining the position of the oncoming lane (16) in relation to the vehicle (10) at the start of the parking process,
- means for determining the anticipated parking trajectory (28) of the vehicle (10),
- means for determining potential points of intersection of the anticipated parking trajectory (28) with the oncoming lane (16) and
- means for providing a signal when there is at least one point of intersection of the parking trajectory with the oncoming lane (16), which signal is processed using means.

8. Device according to Claim 7,
**characterized in that**
the means for determining the position of the oncoming lane (16) in relation to the vehicle (10) has at least one ultrasonic sensor (24), a radar sensor, lidar sensor, video sensor or some other distance sensor.

9. Device according to Claim 7 or 8,
**characterized in that**
the means for determining the position of the oncoming lane (16) in relation to the vehicle (10) is connected to the on-board computer of the vehicle (10).

10. Device according to at least one of Claims 7 to 9,
**characterized in that**
the signal which is made available is processed with a means for warning the driver of the vehicle (10) and/or a means for interrupting the parking process.

## Revendications

1. Procédé pour déterminer pendant une manoeuvre de stationnement la position et/ou la position attendue d'un véhicule par rapport à la voie de circulation en sens inverse d'une chaussée à plusieurs voies, **caractérisé par** les étapes suivantes :
- détermination de la position de la voie (16) de circulation en sens inverse par rapport au véhicule (10) au début de la manoeuvre de stationnement,
- détermination de la trajectoire attendue de stationnement (28) du véhicule (10),
- détermination des points potentiels d'intersection de la trajectoire attendue de stationnement (28) et de la voie (16) de circulation en sens inverse et
- émission d'un signal en cas de présence d'au moins un point d'intersection entre la trajectoire de stationnement (28) et la voie (16) de circulation en sens inverse, ce signal étant traité par des moyens.

2. Procédé selon la revendication 1, **caractérisé en ce que** la trajectoire attendue de stationnement (28) du véhicule (10) est déterminée à l'aide de la position du véhicule (10) au début de la manoeuvre de stationnement et à partir de la position finale attendue de stationnement du véhicule (10).

3. Procédé selon l'une des revendications précédentes, **caractérisé en ce que** la trajectoire attendue de stationnement (28) du véhicule (10) est comparée pendant la manoeuvre de stationnement à la trajectoire effectivement suivie de stationnement (30) du véhicule (10) et **en ce que** le reste de la trajectoire attendue de stationnement est déterminé à partir de ces données.

4. Procédé selon l'une des revendications précédentes, **caractérisé en ce que** la position du véhicule (10) au début de la manoeuvre de stationnement, la position de la voie (16) de circulation en sens inverse par rapport au véhicule (10) au début de la manoeuvre de stationnement et la position finale attendue de stationnement du véhicule (10) sont déterminées au moyen de détecteurs (24) à ultrasons, de détecteurs radar, de détecteurs dits "lidar", de détecteurs vidéo ou d'autres détecteurs de distance, de détecteurs d'angle de direction et/ou d'un système d'avertissement de sortie de la bande de circulation ("Lane Departure Warning Systems").

5. Procédé selon l'une des revendications précédentes, **caractérisé en ce que** les objets (14) proches du véhicule (10) dans la voie (16) de circulation en sens inverse sont classés au moyen d'un système de caméra à base vidéo en fonction du risque effectif de collision avec le véhicule (10).

6. Procédé selon la revendication 5, **caractérisé en ce qu'**en cas de présence d'au moins un point d'intersection entre la trajectoire de stationnement (28) et la voie (16) de circulation en sens inverse, un signal n'est délivré que dans le cas où un objet (14) qui s'approche sur la voie (16) de circulation en sens inverse présente un haut risque de collision potentielle.

7. Dispositif pour déterminer pendant une manoeuvre de stationnement la position et/ou la position attendue d'un véhicule par rapport à la voie de circulation en sens inverse d'une chaussée à plusieurs voies,
**caractérisé par**
- des moyens pour déterminer au début de la manoeuvre de stationnement la position de la voie (16) de circulation en sens inverse par rapport au véhicule (10),
- des moyens pour déterminer la trajectoire attendue de stationnement (28) du véhicule (10),
- des moyens pour déterminer des points potentiels d'intersection de la trajectoire attendue de stationnement (28) avec la voie (16) de circulation en sens inverse et
- des moyens pour délivrer un signal en cas de présence d'au moins un point d'intersection de la trajectoire de stationnement et de la voie (16) de circulation en sens inverse, lequel signal est traité à l'aide de moyens.

8. Dispositif selon la revendication 7, **caractérisé en ce que** le moyen pour déterminer la position de la voie (16) de circulation en sens inverse par rapport au véhicule (10) présente au moins un détecteur (24) à ultrasons, un détecteur radar, un détecteur dit lidar, un détecteur vidéo ou un autre détecteur de distance.

9. Dispositif selon les revendications 7 ou 8,
**caractérisé en ce que** le moyen pour déterminer la position de la voie (16) de circulation en sens inverse par rapport au véhicule (10) est associé à l'ordinateur de bord du véhicule (10).

10. Dispositif selon au moins l'une des revendications 7 à 9, **caractérisé en ce que** le signal délivré est traité avec un moyen d'avertissement du conducteur du véhicule (10) et/ou un moyen d'interruption de la manoeuvre de stationnement.
